# EUROPÄISCHE PATENTSCHRIFT

(11) **EP 0 879 353 B1**
(45) Veröffentlichungstag und Bekanntmachung des Hinweises auf die Patenterteilung: **31.10.2001**
(21) Anmeldenummer: 97901532.8
(22) Anmeldetag: 15.01.1997
(51) Int. Cl.: F02M 61/14, F02F 1/24

(54) **ZYLINDERKOPF EINER DIREKTEINSPRITZENDEN BRENNKRAFTMASCHINE**
CYLINDER HEAD FOR A DIRECT-INJECTION INTERNAL-COMBUSTION ENGINE
CULASSE D'UN MOTEUR A COMBUSTION A INJECTION DIRECTE

(30) Priorität: 17.02.1996 DE 19605934
(43) Veröffentlichungstag der Anmeldung: 25.11.1998
(73) Patentinhaber: AUDI AG, 85045 Ingolstadt (DE)
(72) Erfinder: RIBES-NAVARRO, Salvador, D-74251 Lehrensteinsfeld (DE)
(86) Internationale Anmeldenummer: EP9700148
(87) Internationale Veröffentlichungsnummer: WO9730284

(56) Entgegenhaltungen:
- EP-A- 0 344 597
- DE-A- 3 943 728
- US-A- 3 527 263
- US-A- 4 096 998

## Beschreibung

Die vorliegende Erfindung betrifft einen Zylinderkopf einer direkteinspritzenden Brennkraftmaschine. Ein gattungsgemäßer Zylinderkopf ist aus der DE-OS 43 15 233 bekannt. Dort ist ein Kraftstoffeinspritzventil zwischen Gaswechselventilen angeordnet, die mittels zweier Nockenwellen betätigt werden. Zudem ist dort ein als Spannpratze ausgebildetes Befestigungsmittel mit Halterung für die Kraftstoffeinspritzdüse und einer Ausnehmung für ein Befestigungselement vorgesehen. Diese Spannpratze stützt sich mit einer Seite am Zylinderkopf ab, haltert die Kraftstoffeinspritzdüse mit der gegenüberliegenden Seite und wird mittels des dazwischen angeordneten Befestigungselements angezogen. Diese Anordnung ist jedoch nur bei großzügigen Platzverhältnissen realisierbar. Außerdem muß der Zylinderkopf mit einer geeigneten Stützfläche versehen sein. Das bedeutet aber zusätzliches Material sowie Mehrkosten.

Ausgehend von diesem Stand der Technik ist es Aufgabe der vorliegenden Erfindung, einen Zylinderkopf einer direkteinspritzenden Brennkraftmaschine zu konzipieren, der eine sichere Abdichtung zu den Kraftstoffeinspritzdüsen hin gewährleistet, sich durch eine besonders kompakte Bauweise ohne spezielle Stützflächen auszeichnet und kostengünstig herstellbar ist.

Gelöst wird die Aufgabe durch die Merkmale des Patentanspruchs 1. Indem die Bügel zwei Ausnehmungen aufweisen und zwischen den beiden Ausnehmungen die Halterung für die Kraftstoffdüse angeordnet ist, ist eine optimale Befestigung verwirklicht, welche die für die Dichtigkeit zwischen Zylinderkopf und Kraftstoffeinspritzventil erforderliche hohe Anpreßkraft erlaubt, ohne daß dabei ein Verkippen der Kraftstoffeinspritzdüse auftreten kann. Die Dichtigkeit zwischen Zylinderkopf und Kraftstoffeinspritzventil ist selbst dann sichergestellt, wenn während des Betriebs der Brennkraftmaschine unterschiedliche thermische Ausdehnungen von Zylinderkopf und Kraftstoffeinspritzdüse auftreten. Denn der Bügel kann die thermischen Ausdehnungen durch seine immanente Federwirkung ohne weiteres ausgleichen. Indem darüber hinaus die Ausnehmungen in den Bügeln und je zwei der Bohrungen in den oberen Lagerschalen miteinander fluchten, und die durch die betreffenden Bohrungen hindurchgreifenden Verbindungselemente gleichzeitig als Befestigungselemente durch die Ausnehmungen der Bügel hindurchgreifen, können die Kraftstoffeinspritzdüsen selbst zwischen eng nebeneinander liegenden Nockenwellen problemlos angeordnet und montiert werden, da die erforderliche Befestigung nunmehr äußerst platzsparend mit der Lagerung der Nockenwellen gekoppelt ist und gemeinsame Befestigungs- bzw. Verbindungselemente verwendbar sind. Die erfindungsgemäße Merkmalskombination hat zudem den Vorteil, daß die Notwendigkeit von zusätzlichen Stützflächen entfällt und die Montage der Kraftstoffeinspritzdüsen wesentlich vereinfacht wird. Dadurch werden der Montageaufwand sowie die Herstellungskosten reduziert.

Bevorzugt sind die Bügel zu den beiden Enden bzw. zu den Ausnehmungen hin abgekröpft, so daß die Enden der Bügel gegenüber der Halterung der Bügel parallel versetzt sind. Dieses Merkmal verstärkt die Federwirkung des Bügels. Außerdem kann dadurch die zwischen den Ausnehmungen angeordnete Halterung der Bügel tiefer an den Kraftstoffeinspritzdüsen angreifen, so daß geringere Bauhöhen des Zylinderkopfes möglich sind. Ferner wird durch die Abkröpfung die Festigkeit der Bügel erhöht.

In einer vorteilhaften Ausführungsform sind die Halterungen für die Kraftstoffeinspritzdüsen als Langlöcher ausgebildet, die mit Montageschultern der Kraftstoffeinspritzdüsen zusammenwirken. Die Ausbildung der Halterungen als Langloch ist deswegen vorteilhaft, da ein einfaches Aufstecken der Bügel auf die Montageschultern der Kraftstoffeinspritzdüsen ermöglicht wird, ohne daß der Bügel dabei verkantet. Darüber hinaus werden durch das Langloch etwaige Toleranzen der Positionen der Kraftstoffeinspritzdüsen ausgeglichen.

Die Verbindungselemente für die Lagerschalen können als Schraubenbolzen mit Schraubenmuttern ausgebildet sein. Dadurch ist die Verbindung der Lagerschalen und gegebenenfalls die Befestigung der Bügel auf besonders elegante Weise zu bewerkstelligen. Prinzipiell wäre aber auch denkbar, daß die Verbindungselemente einfach nur als Schrauben ausgebildet sind.

Vorteilhaft weisen die Verbindungselemente, die aus Schraubenbolzen und Schraubenmutter bestehen und die gleichzeitig als Befestigungselemente dienen, jeweils eine weitere Schraubenmutter auf. Diese weitere Schraubenmutter ist zwischen den oberen Lagerschalen und den Bügeln angeordnet. Aufgrund der weiteren Schraubenmutter ist zunächst die Verbindung der Lagerschalen und daraufhin die Befestigung des Bügels möglich, so daß ein Lösen eines der Bügel nicht gleichzeitig auch ein teilweises Lösen der Lagerschalen bedeutet. Zudem ist es durch dieses Merkmal möglich, daß die Lagerdeckel mit größeren Anzugsdrehmomenten befestigt werden können als die Kraftstoffeinspritzdüsen.

In einer besonders bevorzugten Ausführungsform sind zwischen den oberen Lagerschalen und den Bügeln Distanzhülsen vorgesehen. Mittels der Distanzhülsen kann den jeweiligen Bauhöhen von verschiedenen Typen der Kraftstoffeinspritzdüsen Rechnung getragen werden.

Die Erfindung wird nachfolgend unter Bezugnahme auf die Zeichnungsfiguren erläutert. Es zeigen:

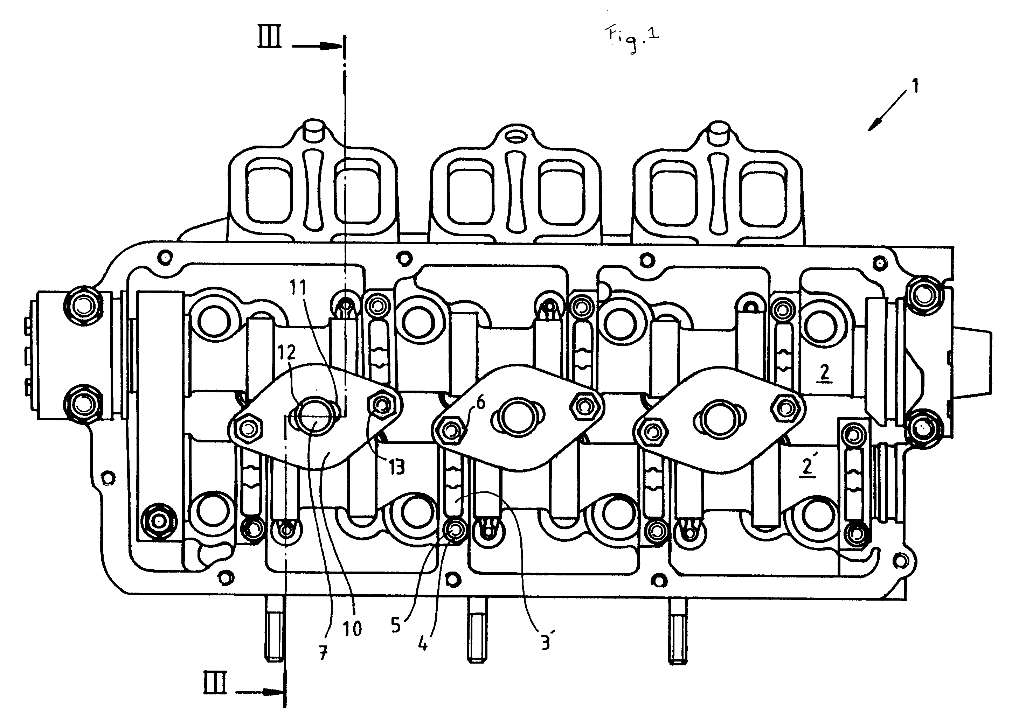

- Figur 1: Eine Draufsicht auf einen erfindungsgemäßen Zylinderkopf in verkleinerter Darstellung,
- Figur 2: eine Seitenansicht des Zylinderkopfes aus Fig. 1 in ebenfalls verkleinerter Darstellung, und
- Figur 3: einen Schnitt des Zylinderkopfes aus Fig. 1 entlang der Linie III-III.

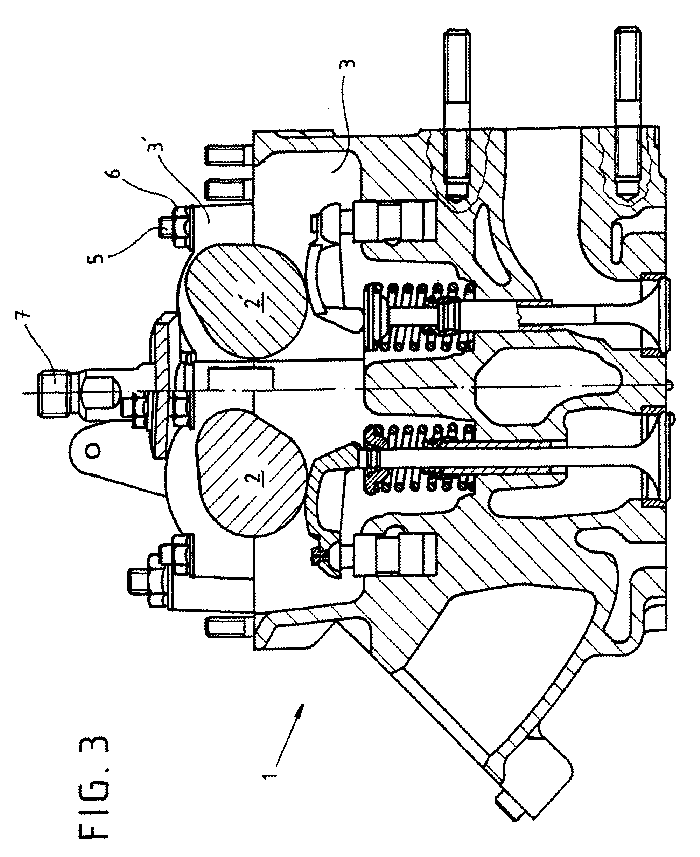

Der Zylinderkopf 1 einer direkteinspritzenden Brennkraftmaschine weist zwei Nockenwellen 2, 2' zur Betätigung der Ein- und Auslaßventile auf. Die Nockenwellen 2, 2' sind zwischen unteren Lagerschalen 3 und oberen Lagerschalen 3' drehbar gelagert. Dabei sind die unteren Lagerschalen 3 Teil des Zylinderkopfes 1 und die oberen Lagerschalen 3' separate Bauteile, die auf die unteren Lagerschalen 3 aufgesetzt sind (vgl. Figur 3). Die oberen Lagerschalen 3' sind bogenförmig ausgebildet und weisen an ihren Enden, das heißt zu beiden Seiten der Nockenwellen 2, 2' Bohrungen 4 auf. Durch diese Bohrungen 4 greifen Verbindungselemente hindurch, die in den unteren Lagerschalen 3 verankert sind. Die Verbindungselemente bestehen aus je einem Schraubenbolzen 5 und einer dazu passenden Schraubenmutter 6. Dabei bilden die Schraubenbolzen 5 gegenüber den oberen Lagerschalen 3' einen Überstand. Auf diesen Überstand sind die Schraubenmuttern 6 aufgeschraubt.

Zwischen den beiden Nockenwellen 2, 2' sind drei senkrecht dazu angeordnete Kraftstoffeinspritzdüsen 7 vorgesehen. Die Kraftstoffeinspritzdüsen 7 ragen mit ihrem einen Ende durch eine Aufnahmeöffnung 8 des Zylinderkopfes 1 hindurch. In die Aufnahmeöffnung 8 ist eine ringförmige Dichtung 9 aus temperaturbeständigem Material, nämlich weichgeglühtem Elektrolytkupfer, eingelegt, die zur Abdichtung dient. Das andere Ende der Kraftstoffeinspritzdüsen 7 ragt über die Ebene, in der die Nockenwellen 2, 2' liegen, hinaus.

Zur Befestigung der Kraftstoffeinspritzdüsen 7 im Zylinderkopf 1 ist jeweils ein Bügel 10 aus Federstahl vorgesehen. Die Bügel 10 weisen etwa mittig eine Halterung 11 auf, die als Langloch ausgebildet ist. Diese Halterungen 11 wirken mit einer rundumlaufenden Montageschulter 12 der Kraftstoffeinspritzdüsen 7 zusammen, indem die Halterung 11 im Bereich der Längsränder des Langloches auf der Montageschulter 12 aufliegt.

Zu beiden Seiten der Halterung 11 weist jeder Bügel 10 eine Ausnehmung 13 auf. Diese Ausnehmungen 13 dienen zur Befestigung der Bügel 10 an dem Zylinderkopf 1, indem die Ausnehmungen 13 in den Bügeln 10 mit einzelnen der Bohrungen 4 in den oberen Lagerschalen 3' fluchten. Dabei haben die durch diese Bohrungen 4 hindurchgreifenden Verbindungselemente nun auch die Funktion von Befestigungselementen. Hierzu greifen die Schraubenbolzen 5 zur Befestigung der Bügel 10 durch die Ausnehmungen 13 hindurch und sind die Schraubenmuttern 6 auf die hindurchgreifenden Schraubenbolzen 5 aufgeschraubt.

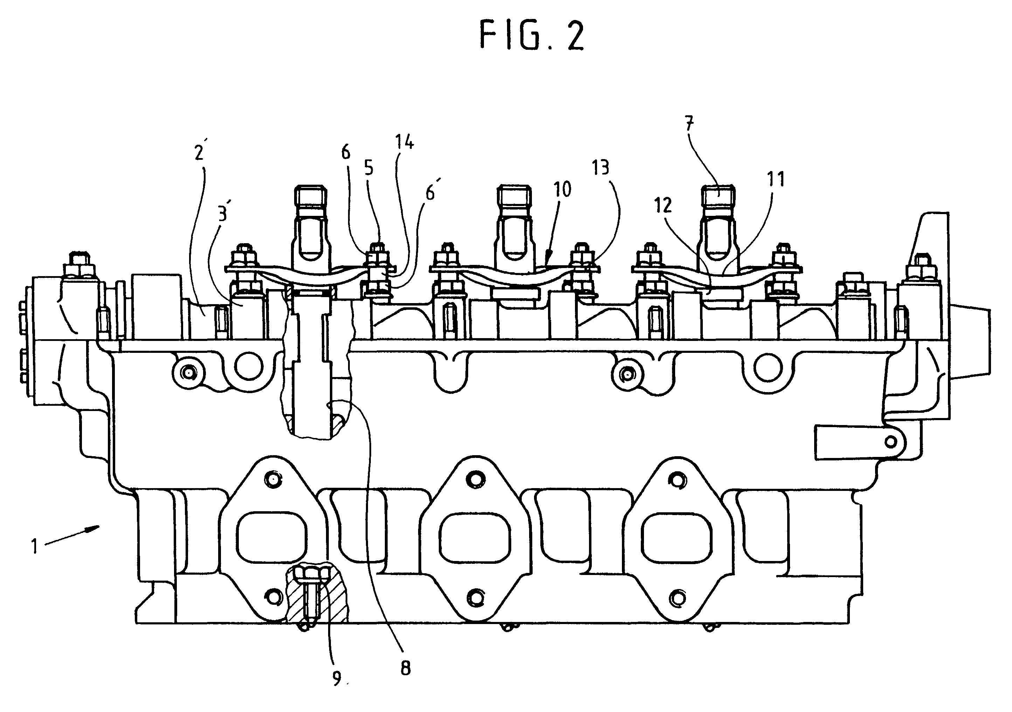

Aus Figur 2 geht deutlich hervor, daß bei einzelnen der Verbindungselemente, die gleichzeitig als Befestigungselemente wirken, jeweils eine weitere Schraubenmutter 6 und eine Distanzhülse 14 vorgesehen ist. Die weitere Schraubenmutter 6' und die Distanzhülse 14 sind dabei zwischen den oberen Lagerdeckeln 3' und den Bügeln 10 angeordnet. Die weitere Schraubenmutter 6' dient zur separaten Montierbarkeit der oberen Lagerschalen 3'. Die Distanzhülse 14 dient dagegen zum Ausgleich der Bauhöhe der Kraftstoffeinspritzdüsen 7 gegenüber der Höhendimensionierung des Zylinderkopfes 1, die geringen Tolleranzen unterworfen ist.

## Patentansprüche

1. Zylinderkopf einer direkteinspritzenden Brennkraftmaschine mit
- zwei Nockenwellen (2,2') die zwischen unteren und oberen Lagerschalen (3,3') drehbar gelagert sind, indem die oberen Lagerschalen Bohrungen (4) aufweisen und Verbindungselemente durch die Bohrungen hindurchgreifen,
- einer Anzahl von Kraftstoffeinspritzdüsen (7), die zwischen den Nockenwellen stehend angeordnet sind, und
- einer gleichen Anzahl von Bügeln (10), die eine Halterung für die Kraftstoffeinspritzdüse und wenigstens eine Ausnehmung (13) für ein Befestigungselement aufweisen,
**dadurch gekennzeichnet, daß**
- die Bügel (10) je zwei Ausnehmungen (13) aufweisen und zwischen den beiden Ausnehmungen (13) die Halterung (11) für die Kraftstoffeinspritzdüse (7) angeordnet ist,
- die Ausnehmungen (13) in den Bügeln (10) und je zwei der Bohrungen (4) in den oberen Lagerschalen (3, 3') miteinander fluchten, und
- die durch die betreffenden Bohrungen (4) hindurchgreifenden Verbindungselemente gleichzeitig als Befestigungselemente durch die Ausnehmungen (13) der Bügel (10) hindurchgreifen.

2. Zylinderkopf nach Anspruch 1, **dadurch gekennzeichnet, daß** die Bügel (10) zu den Ausnehmungen (13) hin abgekröpft sind.

3. Zylinderkopf nach Anspruch 1 oder 2, **dadurch gekennzeichnet, daß** die Halterungen (11) für die Kraftstoffeinspritzdüsen (7) als Langlöcher ausgebildet sind und mit Montageschultern (12) der Kraftstoffeinspritzdüsen (7) zusammenwirken.

4. Zylinderkopf nach einem der Ansprüche 1 bis 3, **dadurch gekennzeichnet, daß** die Verbindungselemente als Schraubenbolzen (5) mit Schraubenmuttern (6) ausgebildet sind.

5. Zylinderkopf nach Anspruch 4, **dadurch gekennzeichnet, daß** die Verbindungselemente, die gleichzeitig als Befestigungselemente dienen, jeweils eine weitere Schraubenmutter (6) aufweisen, die zwischen den oberen Lagerschalen (3, 3') und den Bügeln (10) angeordnet ist.

6. Zylinderkopf nach einem der Ansprüche 1 bis 5, **dadurch gekennzeichnet, daß** zwischen den oberen Lagerschalen (3, 3') und den Bügeln (10) Distanzhülsen (14) vorgesehen sind.

## Claims

1. A cylinder head for a direct-injection internal combustion engine, having
- two camshafts (2, 2') which are mounted between lower and upper bearing shells (3, 3'), in that the upper bearing shells have bores (4) and connecting elements pass through the bores ,
- a number of fuel injection nozzles (7) which are disposed vertically between the camshafts, and
- an identical number of stirrup pieces (10) which comprise a mounting for the fuel injection nozzle and at least one aperture (13) for a fixing element,
**characterised in that**
- the stirrup pieces (10) each have two apertures (13), and the mounting (11) for the fuel injection nozzle (7) ist disposed between the two apertures (13),
- the apertures (13) in the stirrup pieces (10) and each two of the bores (4) in the upper bearing shells (3, 3') are aligned with each other, and
- the connection elements which pass through the respective bores (4) at the same time pass as fixing elements through the apertures (13) of the stirrup pieces (10).

2. A cylinder head according to claim 1, **characterised in that** the stirrup pieces (10) are bent off towards the apertures (13).

3. A cylinder head according to claim 1 or 2, **characterised in that** the mountings (11) for the fuel injection nozzles (7) are constructed as elongated holes and cooperate with mounting collars (12) on the fuel injection nozzles (7).

4. A cylinder head according to any one of claims 1 to 3, **characterised in that** the connection elements are constructed as srew bolts (5) with screw nuts (6).

5. A cylinder head according to claim 4, **characterised in that** the connecting elements, which at the same time serve as fixing elements, each have a further screw nut (6) which is disposed between the upper bearing shells (3, 3') and the stirrup pieces (10).

6. A cylinder head according to any one of claims 1 to 5, **characterised in that** spacer bushes (14) are provided between the upper bearing shells (3, 3') and the stirrup pieces (10).

## Revendications

1. Culasse d'un moteur à combustion interne à injection directe, comportant
- deux arbres à came (2, 2') montés à rotation entre des pièces formant paliers inférieur et supérieur (3, 3'), par le fait que les pièces formant palier supérieurs présentent des perçages (4) et des éléments de liaison passent à travers les perçages,
- une pluralité d'injecteurs de carburant (7), disposés verticalement entre les arbres à came, et
- une pluralité identique d'étriers (10) présentant une fixation pour l'injecteur de carburant et au moins un logement (13) pour un élément de fixation,
**caractérisée en ce que**,
- les étriers (10) présentent chacun deux évidements (13) et la fixation (11) de l'injecteur de carburant (7) est disposée entre les deux évidements (13),
- les évidements (13) ménagés dans les étriers (10) et chaque fois deux des perçages (4) ménagés dans les pièces formant palier supérieur (3, 3') sont alignés ensemble.
- les éléments de liaison, s'engageant dans les perçages (4) concernés, traversent simultanément, à titre d'éléments de fixation, les évidements (13) des étriers (10).

2. Culasse selon la revendication 1, **caractérisée en ce que** les étriers (10) sont pliés pour créer les évidements (13).

3. Culasse selon la revendication 1 ou 2, **caractérisée en ce que** les fixations (11) des injecteurs de carburant (7) sont réalisées sous la forme de trous oblongs et coopèrent avec des épaulements de montage (12) des injecteurs de carburant (7).

4. Culasse selon l'une des revendications 1 à 3, **caractérisée en ce que** les éléments de liaison sont réalisés sous la forme de boulons filetés (5) munis d'écrous (6).

5. Culasse selon la revendication 4, **caractérisée en ce que** les éléments de liaison, qui servent simultanément d'éléments de fixation, présentent chacun un autre écrou (6), disposé entre les pièces formant palier supérieur (3, 3') et les étriers (10).

6. Culasse selon l'une des revendications 3 à 5, **caractérisée en ce que** des douilles d'espacement (14) sont prévues entre les pièces formant palier supérieur (3, 3') et les étriers (10).
